(19) Europäisches Patentamt
European Patent Office
Office européen des brevets

(11) **EP 3 728 871 B1**

(12) **EUROPÄISCHE PATENTSCHRIFT**

(45) Veröffentlichungstag und Bekanntmachung des Hinweises auf die Patenterteilung:
**20.10.2021 Patentblatt 2021/42**

(21) Anmeldenummer: **18803656.0**

(22) Anmeldetag: **14.11.2018**

(51) Int Cl.:
***F16B 13/06*** *(2006.01)*

(86) Internationale Anmeldenummer:
**PCT/EP2018/081157**

(87) Internationale Veröffentlichungsnummer:
**WO 2019/120764 (27.06.2019 Gazette 2019/26)**

(54) **SPREIZANKER MIT BREITER RINGNUT AN SPREIZHÜLSE**

EXPANSION ANCHOR COMPRISING BROAD ANNULAR GROOVE ON EXPANDING SLEEVE

ÉLÉMENT D'ANCRAGE À EXPANSION POURVU D'UNE RAINURE ANNULAIRE ÉLARGIE AU NIVEAU DE LA DOUILLE À EXPANSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2017 EP 17207892**

(43) Veröffentlichungstag der Anmeldung:
**28.10.2020 Patentblatt 2020/44**

(73) Patentinhaber: **Hilti Aktiengesellschaft**
**9494 Schaan (LI)**

(72) Erfinder:
• **HAEUSSLER, Karl**
**7222 Lunden (CH)**
• **FRENSEMEIER, Mareike**
**9470 Buchs (CH)**

• **SHIMAHARA, Hideki**
**9472 Grabs (CH)**
• **LI, Yijun**
**9470 Buchs (CH)**
• **GUEVARA ARRIOLA, Arturo**
**Irving, TX 75063 (US)**
• **YAN, Wentao**
**9470 Buchs SG (CH)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**EP-A1- 3 073 130**

**Beschreibung**

Die Erfindung betrifft einen Spreizanker gemäss dem Oberbegriff des Anspruchs 1. Ein solcher Spreizanker ist ausgestattet mit einem Ankerbolzen und einer Spreizhülse, welche den Ankerbolzen umgibt, wobei am Ankerbolzen ein Spreizkörper für die Spreizhülse vorgesehen ist, der zumindest teilweise vor der Spreizhülse angeordnet ist, und wobei die Spreizhülse an ihrer Aussenseite in einem vorderen Bereich der Spreizhülse eine erste Ringnut mit einer vorderen Flanke und einer rückwärtigen Flanke aufweist.

Die gattungsbildende CA 2979509 A1 zeigt eine Spreizhülse für einen Spreizanker, wobei die Spreizhülse aussenseitig eine Ringnut und eine nach vorne hin offene Ringstufe aufweist.

Die DE 102004053255 A1 beschreibt einen Spreizanker mit einer Spreizhülse, die an einem dem Spreizkörper zugewandten, vorderen Rand eine verringerte Wandstärke und ein verringertes Aussenmass aufweist.

Die EP 2029900 A2 offenbart einen Spreizanker mit einer Vielzahl von Ringnuten in der Spreizhülse. Die EP 0308619 A1 beschreibt einen Spreizanker mit einer Spreizhülse, die an ihrer Aussenseite Schneidzähne und eine Ringnut aufweist. Die EP 0365475 A2 beschreibt einen Anker, bei dem die Spreizhülse eine stirnseitige Abschrägung und eine hiervon beabstandete erste Ringnut aufweist. Ein weiterer Spreizanker ist aus EP 3 073 130 A1 bekannt.

Ein weiterer Spreizanker geht aus der DE 2046341 A1 hervor, wobei dort in der Spreizhülse stirnseitig offene Ringstufen zur Aufnahme von Halteringen vorgesehen sind.

Aufgabe der Erfindung ist es, eine Spreizanker anzugeben, der bei geringem Herstellungsaufwand und hoher Zuverlässigkeit besonders leistungsfähig ist und insbesondere besonders gute Lastwerte aufweist.

Die Aufgabe wird erfindungsgemäss durch einen Spreizanker mit den Merkmalen des Anspruchs 1. Bevorzugte Ausführungsformen sind in den abhängigen Ansprüchen angegeben.

Ein erfindungsgemässer Spreizanker ist dadurch gekennzeichnet, dass, in zumindest einer Radialebene, für die Breite $w_{61}$ der rückwärtigen Flanke der ersten Ringnut gilt

$$w_{61} > 0.6 * d_{60} / \tan \alpha_{max},$$

wobei $d_{60}$ die Tiefe der ersten Ringnut in der zumindest einen Radialebene und $\alpha_{max}$ der maximale Neigungswinkel des Spreizkörpers in der zumindest einen Radialebene ist. Vorzugsweise gilt $w_{61} > 0.8 * d_{60} / \tan \alpha_{max}$, $w_{61} > 0.9 * d_{60} / \tan \alpha_{max}$, oder $w_{61} > 1.0 * d_{60} / \tan \alpha_{max}$, wobei letztgenannte Konfiguration insbesondere dann vorgesehen sein kann, wenn der Spreizkörper zu seinem vorderen Ende hin steiler wird.

Ein Grundgedanke der Erfindung kann darin gesehen werden, die rückwärtige Flanke der ersten Ringnut vergleichsweise breit auszuführen, wobei das Verhältnis von Breite und Tiefe der rückwärtigen Flanke mit der Steigung des Spreizkörpers korreliert. Damit kann die rückwärtige Flanke der ersten Ringnut der Kontur des Spreizkörpers beim Spreizvorgang besonders gut folgen. Infolgedessen können vor der ersten Ringnut liegende Bereiche der Spreizhülse beim Auflaufen auf den Spreizkörper besonders prominent nach aussen gedrückt werden. Dies wiederum kann, bei besonders geringem Aufwand und besonders leistungsfähigen Spreizhülsen, eine besonders gute Verankerung, vorzugsweise unter Ausbildung zumindest einer Hinterschneidung und eines Formschlusses an der Hinterschneidung, ermöglichen. Es hat sich gezeigt, dass hiermit besonders gute Lastwerte auch in solchen Situationen erhalten werden kann, in denen die Randschicht des Bohrlochs geschädigt ist. Da einem Verrutschen der Spreizhülse effektiv entgegengewirkt wird, können die überdies die Montagetiefe und somit die Betonkapazität besonders gut ausgenutzt werden.

Der Spreizkörper, der ein Teil des erfindungsgemässen Spreizankers ist, ist zum Spreizen der Spreizhülse vorgesehen. Der Spreizkörper konvergiert, insbesondere an seiner Aussenseite, nach hinten hin, das heisst der Aussenquerschnitt des Spreizkörpers nimmt nach vorne hin zu. Der Spreizkörper kann aussenseitig zumindest bereichsweise konisch ausgebildet sein und somit auch als Spreizkonus bezeichnet werden. Der Spreizkörper kann die Spreizhülse zur Verankerung im Bohrloch radial aufweiten, wenn der Spreizkörper relativ zur Spreizhülse axial nach hinten versetzt wird, das heisst wenn der Spreizkörper in den Spreizkörper eingezogen wird. Der Spreizkörper ist zumindest teilweise vor der Spreizhülse angeordnet, das heisst zumindest ein Teil des Spreizkörpers befindet sich axial vor der Spreizhülse. Zweckmässigerweise ist der Spreizkörper in einem vorderen Bereich des Ankerbolzens angeordnet.

Vorzugsweise bestehen die Spreizhülse, der Spreizkörper und/oder der Ankerbolzen zumindest bereichsweise aus einem Metallmaterial. Insbesondere ist der Spreizkörper zugfest am Ankerbolzen angeordnet, so dass nach hinten gerichtete Zugkräfte vom Ankerbolzen auf den Spreizkörper übertragen werden können. Der Spreizkörper und der Ankerbolzen können vorzugsweise integral ausgeführt sein. Der Spreizkörper und der Ankerbolzen können aber auch separate Teile sein. Insbesondere kann der Spreizkörper mit dem Ankerbolzen verschraubt sein, vorzugsweise unmittelbar.

In einem rückwärtigen Bereich des Ankerbolzens kann der Ankerbolzen eine Lastangriffsstruktur aufweisen. Die Lastangriffsstruktur dient zum Einleiten von Zugkräften in den Ankerbolzen. Die Lastangriffsstruktur kann beispielsweise ein Aussengewinde oder ein Innengewinde sein. In einer anderen Ausgestaltung kann die Lastangriffsstruktur auch ein Kopf sein, der ein Querschnittsmaximum bildet.

Die Spreizhülse kann einen oder mehrere, vorzugsweise in Längsrichtung verlaufende, Spreizschlitze aufweisen, welche die Spreizhülse in Spreizlappen unterteilen können, und welche die erste Ringnut, gegebenenfalls vorhandene weitere Ringnuten und/oder eine gegebenenfalls vorhandene Ringstufe durchbrechen können. Der vordere Bereich der Spreizhülse ist dem Spreizkörper zugewandt.

Soweit hier von der Axialrichtung und der Radialrichtung die Rede ist, kann sich dies insbesondere auf die Längsachse des Ankerbolzens beziehen, welche insbesondere mit der Längsachse des Spreizankers zusammenfallen kann. Auch die verschiedenen Neigungswinkel sollen sich insbesondere auf die Längsachse des Ankerbolzens beziehen. Die Längsachse des Ankerbolzens verläuft insbesondere in Montagerichtung, also in der Richtung, in welche der Ankerbolzen bei bestimmungsgemässer Montage in ein Bohrloch eingeschoben wird. Der Neigungswinkel des Spreizkörpers soll insbesondere radial aussenseitig am Spreizkörper gemessen werden. Die verschiedenen Breiten sollen insbesondere in axialer Richtung verstanden werden und die verschiedenen Tiefen in radialer Richtung, dies insbesondere bezogen auf die Längsachse des Ankerbolzens. Die Richtungsangaben "vorne" und "hinten" beziehungsweise "rückwärtig" sollen hier einheitlich verwendet werden, dies insbesondere soweit diese Richtungsangaben im Zusammenhang mit dem Ankerbolzen und der Spreizhülse verwendet werden. Insbesondere sollen sich die Richtungsangaben auf die Axialrichtung beziehen. Eine Radialebene soll hier insbesondere eine Radialebene zur Längsachse des Ankerbolzens sein, also in fachüblicher Weise insbesondere eine solche Ebene, welche die Längsachse des Ankerbolzens enthält. Insbesondere ist also die Radialebene eine Radialebene des Ankerbolzens.

Der Winkel $\alpha_{max}$ ist der maximale Neigungswinkel des Spreizkörpers in einem der Spreizhülse zugewandten Bereich des Spreizkörpers, also insbesondere in einem Bereich des Spreizkörpers, der zum Aufweiten der Spreizhülse dienen kann. Insbesondere ist $\alpha_{max}$ der maximale nach vorne offene Neigungswinkel des Spreizkörpers.

Insbesondere können die Spreizhülse und der Ankerbolzen koaxial angeordnet sein.

Unter der Innenseite der Spreizhülse kann insbesondere diejenige Seite verstanden werden, welche dem Ankerbolzen zugewandt ist, und unter der Aussenseite der Spreizhülse diejenige Seite, welche dem Ankerbolzen abgewandt ist. Unter der Aussenseite des Spreizkörpers kann insbesondere dessen Mantelfläche verstanden werden.

Insbesondere weist die vordere Flanke der ersten Ringnut nach hinten und die rückwärtige Flanke der ersten Ringnut nach vorne. Vorzugsweise ist zumindest eine der beiden Flanken der ersten Ringnut kegelmantelartig ausgeführt.

Die erste Ringnut bildet, zumindest in der zumindest einen Radialebene, eine — insbesondere radiale - Vertiefung, insbesondere eine Vertiefung gegenüber dem Grossteil der Aussenseite der Spreizhülse. Vorzugsweise gilt dasselbe für eine gegebenenfalls vorhandene zweite Ringnut und/oder eine gegebenenfalls vorhandene Ringstufe. Die erste Ringnut, eine gegebenenfalls vorhandene zweite Ringnut und/oder eine gegebenenfalls vorhandene Ringstufe umlaufen die Längsachse des Ankerbolzens und/oder liegen jeweils in einer senkrecht zur Längsachse des Ankerbolzens verlaufenden Ebene. Die erste Ringnut, eine gegebenenfalls vorhandene zweite Ringnut und/oder eine gegebenenfalls vorhandene Ringstufe sind an der Aussenseite der Spreizhülse angeordnet, also an der dem Ankerbolzen abgewandten Seite der Spreizhülse.

Soweit nicht anders angegeben sollen die hier beschriebenen Merkmale insbesondere für einen nicht-montierten Spreizanker, also einen Spreizanker vor der Montage, gelten, und/oder für einen Zustand, in dem die Spreizhülse noch nicht vom Spreizkörper aufgeweitet ist und/oder für einen Zustand, in dem zumindest die rückwärtige Flanke der ersten Ringnut axial nach hinten versetzt zum Spreizkörper angeordnet ist. Insbesondere kann beim nicht-montierten Spreizanker der Querschnitt der Spreizhülse kleiner oder gleich gross wie der Querschnitt des Spreizkörpers sein. Wenn der Spreizkörper bei Belastung und axialer Verschiebung in die Spreizhülse gelangt, wird die Spreizhülse so verformt, dass eine prominente Kante vorsteht, welche die Spreizhülse an einer axialen Verschiebung im Bohrloch hindert.

Vorzugsweise weist die rückwärtige Flanke der ersten Ringnut, zumindest in der zumindest einen Radialebene, einen konstanten Neigungswinkel auf.

Es wurde erkannt, dass die Erfindung die Verwendung besonders steiler Spreizkörper ermöglichen kann. Denn erfindungsgemäss kann durch an der Spreizhülse prominent vorstehende Strukturen eine besonders grosse äussere Reibung des montierten Spreizankers an der Spreizhülse erzeugt werden. Damit kann aber auch die innere Reibung an der Spreizhülse erhöht werden, ohne die Spreizhülse aus dem Bohrloch zu ziehen. Besonders bevorzugt ist es, dass der maximale, insbesondere nach vorne offene, Neigungswinkel $\alpha_{max}$ des Spreizkörpers zumindest in der zumindest einen Radialebene grösser als 10° oder grösser als 15° ist. Dies kann im Hinblick auf die Lastwerte vorteilhaft sein.

Besonders bevorzugt ist es, dass sich, zumindest in zumindest einer Radialebene, der Neigungswinkel der rückwärtigen Flanke der ersten Ringnut und der Neigungswinkel des Spreizkörpers in einer Gegenzone des Spreizkörpers um weniger als 8°, vorzugsweise um weniger als 6° oder weniger als 4°, unterscheiden. Dies insbesondere in einem Zustand, in dem zumindest die rückwärtige Flanke der ersten Ringnut, vorzugsweise die gesamte erste Ringnut, zumindest in der zumindest einen Radialebene, gegenüber der Gegenzone nach hinten versetzt ist, also insbesondere in einem Zustand vor der Montage des Spreizankers. Es gilt also ($\beta_{61} = \alpha_{27} \pm$

8°), ($\beta_{61}$ = 027 ± 6°), oder ($\beta_{61}$ = $\alpha_{27}$ ± 4°), wobei $\beta_{61}$ der Neigungswinkel der rückwärtigen Flanke der ersten Ringnut und $\alpha_{27}$ der Neigungswinkel des Spreizkörpers in der Gegenzone ist. Diese Ausgestaltung basiert auf dem Gedanken, die rückwärtige Flanke der ersten Ringnut als eine Art Spiegelbild zum Spreizkörper in seiner Gegenzone auszuführen. Damit kann die rückwärtige Flanke beim Auflaufen auf den Spreizkörper einen zumindest annähernd nivellierten Bereich bilden, so dass der vor der ersten Ringnut liegende Bereich der Spreizhülse, beispielsweise dort angeordnete Ringstege, beim Auflaufen auf den Spreizkörper noch prominenter nach aussen gedrückt werden können, was eine noch bessere Verankerung ermöglichen kann.

In der Gegenzone weist der Spreizkörper, zumindest in der zumindest einen Radialebene, einen konstanten Neigungswinkel auf. Die Gegenzone des Spreizkörpers soll eine signifikante axiale Ausdehnung haben, so dass der Neigungswinkel des Spreizkörpers in der Gegenzone nicht als Winkel einer Tangente zu verstehen ist, sondern als Winkel über einen axial ausgedehnten Bereich. Die Gegenzone des Spreizkörpers befindet sich radial aussenseitig am Spreizkörper und/oder dient dazu, zum radialen Spreizen der Spreizhülse gegen die Spreizhülse zu wirken. In der Gegenzone konvergiert der Spreizkörper nach hinten, also zur Spreizhülse hin, zumindest in der zumindest einen Radialebene. Insbesondere ist der Neigungswinkel des Spreizkörpers in der Gegenzone ein spitzer Winkel, also kein rechter Winkel. Die rückwärtige Flanke der ersten Ringnut nähert sich nach vorne hin an die Längsachse des Ankerbolzens an, zumindest in der zumindest einen Radialebene.

Der Neigungswinkel des Spreizkörpers in der Gegenzone und der Neigungswinkel der rückwärtigen Flanke der erste Ringnut sind insbesondere beides spitze Winkel, wobei der Neigungswinkel des Spreizkörpers in der Gegenzone nach vorne offen ist und der Neigungswinkel der rückwärtigen Flanke nach hinten offen ist. Da die Gegenzone und die rückwärtige Flanke der erste Ringnut zumindest annähernd zueinander korrespondieren, und da bei der bestimmungsgemässen Verwendung des Spreizankers die Gegenzone auf Höhe der rückwärtigen Flanke von innen, also hülseninnenseitig, gegen die Spreizhülse wirkt, kann die Gegenzone auch Flanken-Gegenzone genannt werden.

Besonders bevorzugt ist es, dass, zumindest in der zumindest einen Radialebene, die Breite $w_{27}$ der Gegenzone zumindest so gross ist wie die Breite $w_{61}$ der rückwärtigen Flanke der ersten Ringnut. Es gilt also $w_{61}$ ≤ $w_{27}$. Damit kann die Spreizhülse der korrespondierenden Kontur des Spreizkörpers besonders gut folgen.

Eine weitere bevorzugte Ausgestaltung der Erfindung liegt darin, dass, zumindest in der zumindest einen Radialebene, die vordere Flanke der ersten Ringnut steiler ist als die rückwärtige Flanke der ersten Ringnut. "Steil" ist dabei insbesondere bezogen auf die Längsachse des Ankerbolzens zu verstehen und soll den Neigungswinkel zu dieser Längsachse beinhalten. Hierdurch kann die Leistungsfähigkeit und/oder die Verankerung an der Bohrlochwand noch weiter verbessert werden.

Darüber hinaus ist es vorteilhaft, dass, zumindest in der zumindest einen Radialebene, die vordere Flanke der ersten Ringnut an die rückwärtige Flanke der ersten Ringnut angrenzt. Demgemäss ist also insbesondere kein zwischenliegender zylindrischer Nutengrund gegeben. Auch hierdurch kann die Leistungsfähigkeit und/oder die Verankerung an der Bohrlochwand noch weiter verbessert werden. Es kann aber auch ein zwischenliegender zylindrischer Nutengrund vorgesehen werden.

Vorzugsweise weist, zumindest in der zumindest einen Radialebene, die Spreizhülse an ihrer Innenseite eine vorderseitige Abschrägung auf. Hierdurch kann unter anderem ein besonders gutes Verformungsverhalten erreicht werden. Besonders bevorzugt ist es, dass, zumindest in der zumindest einen Radialebene, zumindest ein Teilbereich der ersten Ringnut gegenüber der Abschrägung nach hinten versetzt ist. Vorzugsweise ist, zumindest in der zumindest einen Radialebene, zumindest die rückwärtige Flanke der ersten Ringnut gegenüber der Abschrägung nach hinten versetzt. Hierdurch kann eine besonders grosse Restwandstärke der Spreizhülse erreicht werden und somit einem vorzeitigen Reissen der Spreizhülse besonders wirksam entgegengewirkt werden. Insbesondere kann vorgesehen werden, dass, zumindest in der zumindest einen Radialebene, die gesamte erste Ringnut gegenüber der Abschrägung nach hinten versetzt ist, was unter anderem herstellungstechnisch und leistungsmässig vorteilhaft sein kann.

Weiterhin ist es besonders zweckmässig, dass die Spreizhülse an ihrer Aussenseite, insbesondere im vorderen Bereich der Spreizhülse, vor der ersten Ringnut zumindest eine zweite Ringnut aufweist. Hierdurch kann die Verankerung noch weiter verbessert werden. Die beiden Ringnuten verlaufen vorzugsweise parallel zueinander, was für eine besonders gleichmässige Krafteinleitung sorgen kann und auch fertigungstechnische Vorteile haben kann. Insbesondere kann die zweite Ringnut durch einen ersten Ringsteg von der ersten Ringnut getrennt sein. Vorzugsweise fluchtet dieser Ringsteg an seinem Scheitel mit einem hinter der ersten Ringnut angeordneten Bereich der Spreizhülse, das heisst der Scheitel des Ringstegs hat denselben Abstand von der Längsachse des Ankerbolzens wie der hinter der ersten Ringnut angeordnete Bereich der Spreizhülse.

Vorzugsweise ist, zumindest in der zumindest einen Radialebene, die Breite der zweiten Ringnut kleiner als die Breite der ersten Ringnut, was die Leistungsfähigkeit, die Verankerung und/oder das Spreizverhalten noch weiter verbessern kann.

Weiterhin ist es besonders zweckmässig, dass die Spreizhülse an ihrer Aussenseite, insbesondere im vorderen Bereich der Spreizhülse, insbesondere vor der ersten Ringnut und vorzugsweise vor der gegebenenfalls vorhandenen zweiten Ringnut zumindest eine vorderseitig offene Ringstufe aufweist. Diese zuvorderst liegende Ringstufe kann durch Verkleinerung der an die Bohrlochwand gedrückten Fläche und/oder durch Bildung einer Art Hebel ein besonders effizientes Eindringen der hinter der Ringstufe angeordneten Strukturen in die Bohrlochwand ermöglichen. Die Ringstufe und die erste Ringnut verlaufen vorzugsweise parallel zueinander, was für eine besonders gleichmässige Krafteinleitung sorgen kann und auch fertigungstechnische Vorteile haben kann. Insbesondere kann die Ringstufe durch einen zweiten Ringsteg von der zweiten Ringnut getrennt sein.

Weiterhin ist es vorteilhaft, dass, zumindest in der zumindest einen Radialebene, die Tiefe der ersten Ringnut zumindest so gross ist wie das 0.25-fache, vorzugsweise zumindest so gross ist wie das 0.4-fache, der Restwandstärke der Spreizhülse an der ersten Ringnut. Gleiches kann für die zweite Ringnut und/oder die Ringstufe gelten. Die Ringnuten und/oder die Ringstufe weisen also jeweils eine signifikante Tiefe auf. Hierdurch können besonders prominente aussenseitige Strukturen und somit eine besonders wirksame Verankerung erzielt werden.

Der Ankerbolzen kann vorzugsweise einen Hülsenanschlag aufweisen, der eine axiale Verschiebung der Spreizhülse vom Spreizkörper hinweg, also nach hinten hin, begrenzt. In diesem Fall kann der Spreizanker als sogenannter Bolzenanker ausgeführt sein. Vorzugsweise kann in diesem Fall der Spreizkörper integral mit dem Ankerbolzen ausgeführt sein. Die Spreizhülse kann aber auch bis zur Lastangriffsstruktur des Ankerbolzens reichen. In diesem Fall kann der Spreizanker als sogenannter Hülsenanker ausgeführt sein. Insbesondere in diesem Fall kann der Spreizkörper separat vom Ankerbolzen ausgeführt sein, wobei der Spreizkörper über eine Schraubverbindung mit dem Ankerbolzen verbunden ist. Der Hülsenanschlag kann vorzugsweise durch einen Kreisring gebildet werden. Der Hülsenanschlag kann beispielsweise an einer ringförmigen Schulter ausgebildet sein, die den Ankerbolzen aussenseitig umläuft.

Die Erfindung betrifft auch die bestimmungsgemässe Verwendung des Spreizankers, insbesondere die bestimmungsgemässe Montage des Spreizankers. Insbesondere betrifft die Erfindung eine Verwendung eines erfindungsgemässen Spreizankers, bei welcher der Spreizkörper so weit in die Spreizhülse eingebracht wird, bis, zumindest in der zumindest einen Radialebene, die Spreizhülse auf Höhe der rückwärtigen Flanke der ersten Ringnut auf den Spreizkörper aufläuft. Dies beinhaltet insbesondere, dass der Spreizkörper so weit, insbesondere nach hinten, in die Spreizhülse eingebracht wird, bis sich, zumindest in der zumindest einen Radialebene, die rückwärtige Flanke der ersten Ringnut und der Spreizkörper zumindest bereichsweise axial überlagern. Die spiegelbildlichen rückwärtige Flanke und der Spreizkörper kommen demgemäss in Überlagerung und können bestimmungsgemäss wechslwirken.

Merkmale, die im Zusammenhang mit dem erfindungsgemässen Spreizanker erläutert werden, können auch bei der erfindungsgemässen Verwendung zum Einsatz kommen, so wie auch umgekehrt Merkmale, die im Zusammenhang mit der erfindungsgemässen Verwendung erläutert werden, auch beim erfindungsgemässen Spreizanker zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

Figur 1: eine Seitenansicht eines erfindungsgemässen Spreizankers;

Figur 2: eine Seitenansicht des Ankerbolzens des Spreizankers ohne Spreizhülse;

Figur 3: eine teilweise längsgeschnittene Ansicht des Spreizankers;

Figur 4: eine Detail-Längsschnittansicht des Spreizankers im Bereich des vorderen Endes der Spreizhülse;

Figur 5: die Ansicht der Figur 4, der Übersichtlichkeit halber jedoch ohne Bezugszeichen; und

Figur 6: eine schematische Längsschnittansicht des Spreizankers im Bereich des vorderen Endes des Spreizankers nach Abschluss des Spreizvorgangs.

Die Figuren zeigen ein Ausführungsbeispiel eines erfindungsgemässen Spreizankers. Der Spreizanker weist einen Ankerbolzen 20 sowie eine Spreizhülse 10 auf, wobei die Spreizhülse 10 den Ankerbolzen 20 ringförmig umgibt. Der Ankerbolzen 20 weist einen Halsbereich 25 mit zumindest annähernd konstantem Querschnitt auf. Im Anschluss an den Halsbereich 25 weist der Ankerbolzen 20 vor dem Halsbereich 25, im vorderen Endbereich des Ankerbolzens 20, einen Spreizkörper 26 für die Spreizhülse 10 auf, der hier beispielhaft integral mit dem Ankerbolzen 20 ausgeführt ist. Der Spreizkörper 26 weitet sich an seiner Aussenoberfläche ausgehend vom Halsbereich 25 nach vorne hin auf, das heisst der Spreizkörper 26 konvergiert an seiner Aussenseite nach hinten hin. Die Spreizhülse 10 umgibt den Halsbereich 25 des Ankerbolzens 20. Der Spreizkörper 26 ist vor der Spreizhülse 10 angeordnet.

Der Ankerbolzen 20 weist ferner einen beispielsweise als Kreisring ausgebildeten Hülsenanschlag 22 auf, der eine Axialbewegung der Spreizhülse 10 zum rückwärtigen Ende des Ankerbolzens 20 hin, das heisst eine Axialbewegung der Spreizhülse 10 vom Spreizkörper 26 hinweg, begrenzt. Der Hülsenanschlag 22 ist an einer Ringschulter 23 ausgebildet, welche den Ankerbolzen 20 umläuft.

An seinem dem Spreizkörper 26 entgegengesetzten rückwärtigen Endbereich weist der Ankerbolzen 20 eine, hier beispielsweise als Aussengewinde dargestellte, Lastangriffsstruktur 34 zum Einleiten von Zugkräften in den Ankerbolzen 20 auf. Auf diesem Aussengewinde kann eine nicht dargestellte Mutter mit korrespondierendem Innengewinde angeordnet sein.

Die Spreizhülse 10 weist mehrere Spreizschlitze 13 auf, welche sich von der vorderen Stirnseite 19 der Spreizhülse 10, die dem Spreizkörper 26 zugewandt ist, in die Spreizhülse 10 hinein erstrecken. Zwischen diesen Spreizschlitzen 13 sind Spreizlappen gebildet.

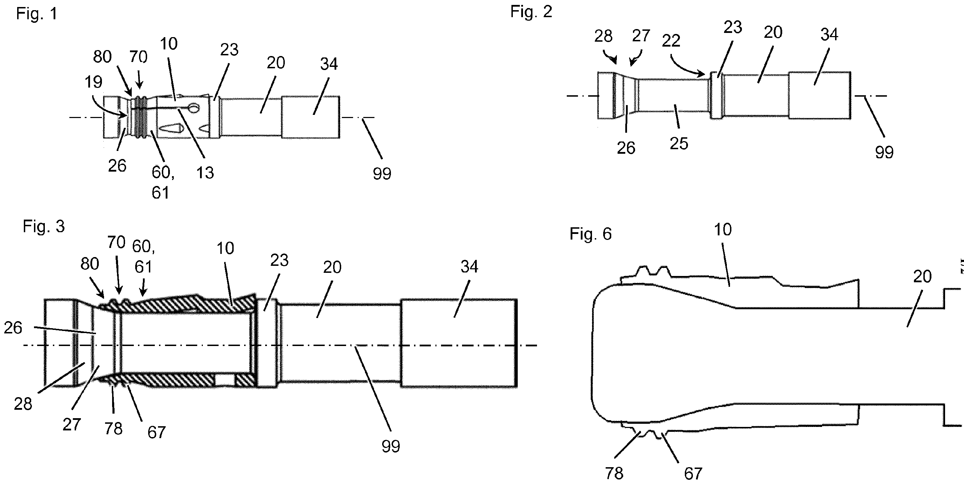

Im vorderen Bereich der Spreizhülse 10, welcher in den Figuren 1, 3, 4, 5 und 6 links liegt, weist die Spreizhülse 10 auf ihrer Aussenseite, das heisst auf derjenigen Seite, welche dem Ankerbolzen 20 abgewandt ist, eine erste Ringnut 60 auf, welche die Spreizhülse 10 umläuft. Vor der ersten Ringnut 60 weist die Spreizhülse 10 auf ihrer Aussenseite eine zweite Ringnut 70 auf, welche die Spreizhülse 10 umläuft. Vor der ersten Ringnut 60 und vor der zweiten Ringnut 70 weist die Spreizhülse 10 auf ihrer Aussenseite eine Ringstufe 80 auf, welche die Spreizhülse 10 umläuft.

Die erste Ringnut 60 hat eine rückwärtige Flanke 61, welche nach vorne und/oder zum Spreizkörper 26 hin weist, und eine vordere Flanke 62, welche nach hinten hin weist. Die rückwärtige Flanke 61 nähert sich nach vorne hin der Längsachse 99 des Ankerbolzens 20 an und die vordere Flanke 62 nähert sich nach hinten hin der Längsachse 99 des Ankerbolzens 20 an. Die beiden Flanken 61 und 62 der ersten Ringnut 60 verlaufen jeweils spitzwinklig zur Längsachse 99 des Ankerbolzens 20. Die beiden Flanken 61 und 62 der ersten Ringnut 60 gehen unmittelbar, also ohne zylindrischen Nutengrund, ineinander über.

Die zweite Ringnut 70 weist einen zylindrischen, also parallel zur Längsachse 99 des Ankerbolzens 20 verlaufenden, Nutengrund auf, der von einer vorderen Flanke und einer rückwärtigen Flanke begrenzt wird. Die beiden Flanken der zweiten Ringnut 70 verlaufen jeweils spitzwinklig zur Längsachse 99 des Ankerbolzens 20.

Die Ringstufe 80 ist zur vorderen Stirnseite 19 der Spreizhülse 10 hin offen und weist somit nur eine einzige Flanke, nämlich eine rückwärtige Flanke auf, die hier rechtwinklig zur Längsachse 99 des Ankerbolzens 20 verläuft. Der Grund der Ringstufe 80 ist etwa zylindrisch ausgeführt.

Zwischen der ersten Ringnut 60 und der zweiten Ringnut 70 ist an der Aussenseite der Spreizhülse 10 ein erster Ringsteg 67 gebildet und zwischen der zweiten Ringnut 70 und der Ringstufe 80 ist an der Aussenseite der Spreizhülse 10 ein zweiter Ringsteg 78 gebildet.

Auf ihrer Innenseite, das heisst auf der Seite, welche dem Ankerbolzen 20 zugewandt ist, weist die Spreizhülse 10 eine Abschrägung 90 auf, welche bis zur vorderen Stirnseite 19 der Spreizhülse 10 reicht, und aufgrund derer die Wandstärke der Spreizhülse 10 nach vorne, zur vorderen Stirnseite 19 hin abnimmt. Die Abschrägung 90 ist dem Spreizkörper 26 des Ankerbolzens 20 zugewandt, so dass der Spreizkörper 26 gegen die Abschrägung 90 wirken kann. Die Abschrägung 90 überlappt die zweite Ringnut 70 und die Ringstufe 80 axial, und ist gegenüber der ersten Ringnut 60 axial nach vorne versetzt angeordnet. Auf axialer Höhe der ersten Ringnut 60 verläuft die Innenseite der Spreizhülse 10 im Wesentlichen parallel zur Längsachse 99 des Ankerbolzens 20, das heisst die Innenseite der Spreizhülse ist dort zylindrisch ausgebildet.

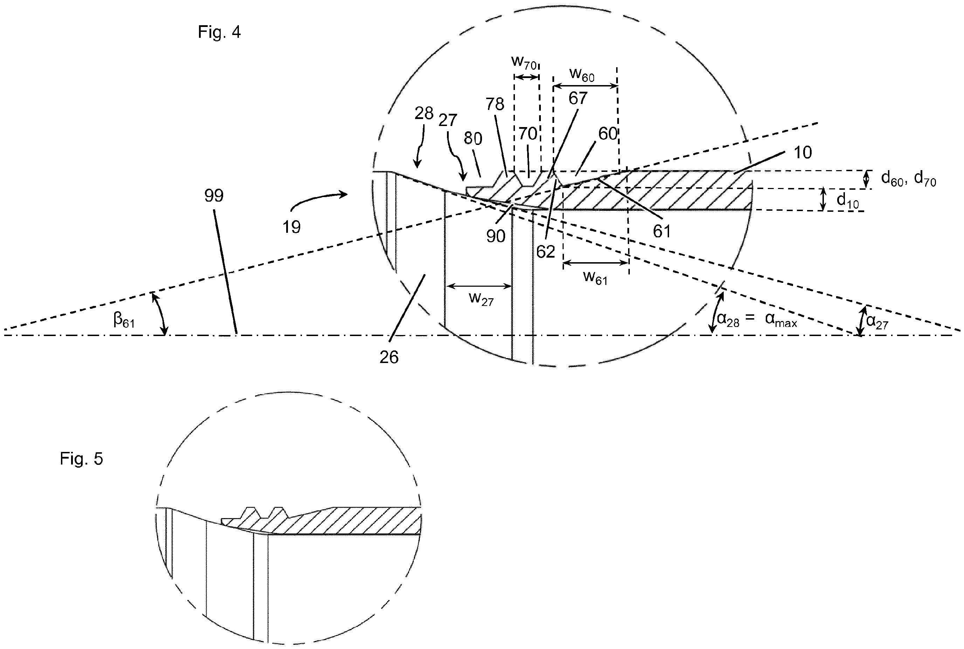

Die Figuren 4 und 5 zeigen Längsschnittansichten durch die Längsachse 99 des Ankerbolzens 20, also Ansichten in einer von der Längsachse 99 ausgehenden Radialebene. In dieser Radialebene weist die erste Ringnut 60 eine, radial gemessene, Tiefe $d_{60}$ und eine, axial gemessene, Breite $w_{60}$ auf, die zweite Ringnut 70 eine, radial gemessene, Tiefe $d_{70}$ und eine, axial gemessene, Breite $w_{70}$, die rückwärtige Flanke 61 der ersten Ringnut 60 einen Neigungswinkel $\beta_{61}$ zur Längsachse 99 und eine, axial gemessene, Breite $w_{61}$. Am Scheitel zwischen den beiden Flanken 61 und 62 der ersten Ringnut 60 weist die Spreizhülse 10 eine, radial gemessene, Restwandstärke $d_{10}$ in der Radialebene auf.

Der Spreizkörper 26 weist, insbesondere radial aussenseitig, eine axial ausgedehnte, also in Richtung der Längsachse 99 des Ankerbolzens 20 ausgedehnte, nach hinten hin konvergierende Gegenzone 27 zum Angreifen an der Spreizhülse 10 auf. Die Gegenzone 27 hat eine, axial gemessene, Breite $w_{27}$ in der Radialebene. In der Gegenzone 27 weist der Spreizkörper 26, zumindest in der Radialebene, einen konstantem Neigungswinkel $\alpha_{27}$ zur Längsachse 99 des Ankerbolzens 20 auf.

Axial vor der Gegenzone 27 weist der Spreizkörper 26 im dargestellten Ausführungsbeispiel eine axial ausgedehnte, nach hinten hin konvergierende weitere Zone 28 auf. In dieser weiteren Zone 28 weist der Spreizkörper 26, zumindest in der Radialebene, aussenseitig einen konstantem Neigungswinkel $\alpha_{28}$ zur Längsachse 99 des Ankerbolzens 20 auf. Dieser Neigungswinkel $\alpha_{28}$ in der weiteren Zone 28 ist hier der maximale nach vorne offene aussenseitige Neigungswinkel $\alpha_{max}$ des Spreizkörpers 26, wobei der Neigungswinkel $\alpha_{28}$ — hier nicht dargestellt - auch grösser 30° sein kann. Die weitere Zone 28 ist aber nur fakultativ und kann auch entfallen, wobei dann der Neigungswinkel $\alpha_{27}$ in der Gegenzone 27 der maximale aussenseitige nach vorne offene Neigungswinkel $\alpha_{max}$ des Spreizkörpers 26 sein kann.

Zumindest in der Radialebene entspricht der Neigungswinkel $\beta_{61}$ der rückwärtige Flanke 61 zur Längsachse 99 im Wesentlichen dem Neigungswinkel $\alpha_{27}$ des Spreizkörpers 26 in der Gegenzone 27 zur Längsachse 99, und die Breite $w_{61}$ der rückwärtigen Flanke 61 entspricht im Wesentlichen der Breite $w_{27}$ der Gegenzone 27, wobei sich die rückwärtige Flanke 61 nach vorne hin an die Längsachse 99 des Ankerbolzens 20 annähert und sich die Gegenzone 27 des Spreizkörpers 26 hinten hin an die Längsachse 99 des Ankerbolzens 20 annähert, das heisst sie beiden Neigungswinkel $\beta_{61}$ und $\alpha_{27}$ öffnen sich in entgegengesetzter Richtung. Die rückwärtige Flanke 61 stellt somit, zumindest in der Radialebene, ein Spiegelbild des Spreizkörpers 26, insbesondere in der Gegenzone 27, dar, insbesondere ein Spiegelbild einer Spiegelung um eine parallel zur Längsachse 99 des Ankerbolzens 20 verlaufende Spiegelachse. Es gilt $w_{61} > 0.6 * d_{60} / \tan \alpha_{max}$, das heisst die rückwärtige Flanke 61 ist relativ breit.

Beim Montieren des Spreizankers wird der Ankerbolzen 20 mit seinem vorderen Ende voran in Richtung der Längsachse 99 des Spreizankers in ein Bohrloch geschoben. Aufgrund des Hülsenanschlags 22, der eine Verschiebung der Spreizhülse 10 zum hinteren Ende des Ankerbolzens 20 blockiert, wird dabei auch die Spreizhülse 10 in das Bohrloch eingebracht. Sodann wird der Ankerbolzen 20, beispielsweise durch Anziehen einer Mutter, die auf der als Aussengewinde ausgebildeten Lastangriffsstruktur 34 angeordnet ist, wieder ein Stück weit aus dem Bohrloch herausgezogen. Aufgrund ihrer Reibung mit der Bohrlochwand bleibt die Spreizhülse 10 dabei zurück und es kommt zu einer axialen Verschiebung des Ankerbolzens 20 relativ zur Spreizhülse 10 nach hinten, im Verlauf derer der - zumindest axial - am Ankerbolzen 20 festliegende Spreizkörper 26 immer tiefer so in die Spreizhülse 10 eindringt, dass die Spreizhülse 10 vom Spreizkörper 26 radial aufgeweitet und mit der Wand des Bohrlochs verpresst wird. Durch diesen Mechanismus wird der Spreizanker im Substrat fixiert. Der resultierende Zustand ist schematisch in Figur 6 dargestellt.

Bei der bestimmungsgemässen Verwendung des Spreizankers, insbesondere beim bestimmungsgemässen Montieren des Spreizankers, läuft die Spreizhülse 10 auf Höhe der rückwärtigen Flanke 61 der ersten Ringnut 60 auf die Gegenzone 27 des Spreizkörper 26 auf. Da die rückwärtige Flanke 61 der ersten Ringnut 60 relativ breit ist und insbesondere eine Art Spiegelbild der Gegenzone 27 bildet, wird die Spreizhülse dabei auf Höhe der rückwärtigen Flanke 61 nivelliert und der erste Ringsteg 67 prominent nach aussen gedrängt, was in Figur 6 erkennbar ist. Hierdurch kann eine besonders gute Verankerung mit der Bohrlochwand gegeben sein.

**Patentansprüche**

1. Spreizanker mit einem Ankerbolzen (20) und einer Spreizhülse (10), welche den Ankerbolzen (20) umgibt, wobei am Ankerbolzen (20) ein Spreizkörper (26) für die Spreizhülse (10) vorgesehen ist, der zumindest teilweise vor der Spreizhülse (10) angeordnet ist, und wobei die Spreizhülse (10) an ihrer Aussenseite in einem vorderen Bereich der Spreizhülse (10) eine erste Ringnut (60) mit einer vorderen Flanke (62) und einer rückwärtigen Flanke (61) aufweist,

**dadurch gekennzeichnet,**
**dass**, in zumindest einer Radialebene, für die Breite $w_{61}$ der rückwärtigen Flanke (61) der ersten Ringnut (60) gilt:

$$w_{61} > 0.6 * d_{60} / \tan \alpha_{max},$$

wobei $d_{60}$ die Tiefe der ersten Ringnut (60) in der zumindest einen Radialebene und $\alpha_{max}$ der maximale Neigungswinkel des Spreizkörpers (26) in der zumindest einen Radialebene ist.

2. Spreizanker nach Anspruch 1,
**dadurch gekennzeichnet,**
**dass** der maximale Neigungswinkel ($\alpha_{max}$) des Spreizkörpers (26) zumindest in der zumindest einen Radialebene grösser als 10° ist.

3. Spreizanker nach einem der vorstehenden Ansprüche,

**dadurch gekennzeichnet,**
**dass** sich, zumindest in der zumindest einen Radialebene, der Neigungswinkel ($\beta_{61}$) der rückwärtigen Flanke (61) der ersten Ringnut (60) und der Neigungswinkel ($\alpha_{27}$) des Spreizkörpers (26) in einer Gegenzone (27) des Spreizkörpers (26) um weniger als 8° unterscheiden, und
**dass**, zumindest in der zumindest einen Radialebene, die Breite ($w_{27}$) der Gegenzone (27) zumindest so gross ist wie die Breite ($w_{61}$) der rückwärtigen Flanke (61) der ersten Ringnut (60).

4. Spreizanker nach einem der vorstehenden Ansprüche,
**dadurch gekennzeichnet,**
**dass**, zumindest in der zumindest einen Radialebene, die vordere Flanke (62) der ersten Ringnut (60) steiler ist als die rückwärtige Flanke (61) der ersten Ringnut (60).

5. Spreizanker nach einem der vorstehenden Ansprüche,
**dadurch gekennzeichnet,**
**dass**, zumindest in der zumindest einen Radialebene, die vordere Flanke (62) der ersten Ringnut (60) an die rückwärtige Flanke (61) der ersten Ringnut (60) angrenzt.

6. Spreizanker nach einem der vorstehenden Ansprüche,
**dadurch gekennzeichnet,**
**dass**, zumindest in der zumindest einen Radialebene, die Spreizhülse (10) an ihrer Innenseite eine vorderseitige Abschrägung (90) aufweist, und zumindest ein Teilbereich der ersten Ringnut (60) gegenüber der Abschrägung (90) nach hinten versetzt ist.

7. Spreizanker nach einem der vorstehenden Ansprüche,
**dadurch gekennzeichnet,**
**dass** die Spreizhülse (10) an ihrer Aussenseite vor der ersten Ringnut (60) zumindest eine zweite Ringnut (70) aufweist.

8. Spreizanker nach Anspruch 7,
**dadurch gekennzeichnet,**
**dass**, zumindest in der zumindest einen Radialebene, die Breite ($w_{70}$) der zweiten Ringnut (70) kleiner ist als die Breite ($w_{60}$) der ersten Ringnut (60).

9. Spreizanker nach einem der vorstehenden Ansprüche,
**dadurch gekennzeichnet,**
**dass** die Spreizhülse (10) an ihrer Aussenseite zumindest eine vorderseitig offene Ringstufe (80) aufweist.

10. Spreizanker nach einem der vorstehenden Ansprüche,
**dadurch gekennzeichnet,**
**dass**, zumindest in der zumindest einen Radialebene, die Tiefe ($d_{60}$) der ersten Ringnut (60) zumindest so gross ist wie das 0.25-fache der Restwandstärke ($d_{10}$) der Spreizhülse an der ersten Ringnut (60).

11. Spreizanker nach einem der vorstehenden Ansprüche,
**dadurch gekennzeichnet,**
**dass** der Ankerbolzen (20) einen Hülsenanschlag (22) aufweist, der eine axiale Verschiebung der Spreizhülse (10) vom Spreizkörper (26) hinweg begrenzt.

12. Verwendung eines Spreizankers nach einem der vorstehenden Ansprüche, bei welcher der Spreizkörper (26) so weit in die Spreizhülse (10) eingebracht wird, bis, zumindest in der zumindest einen Radialebene, die Spreizhülse (10) auf Höhe der rückwärtigen Flanke (61) der ersten Ringnut (60) auf den Spreizkörper (26) aufläuft.

## Claims

1. Expansion anchor, comprising an anchor bolt (20) and an expansion sleeve (10) which surrounds the anchor bolt (20), an expansion body (26) for the expansion sleeve (10) being provided on the anchor bolt (20), which expansion body is arranged at least partially in front of the expansion sleeve (10), and the expansion sleeve (10) having, on the outside in a front region of the expansion sleeve (10), a first annular groove (60) comprising a front flank (62) and a rear flank (61),

**characterized in that,**
in at least one radial plane, the following applies to the width $w_{61}$ of the rear flank (61) of the first annular groove (60):

$$w_{61} > 0.6 * d_{60} / \tan \alpha_{max},$$

where $d_{60}$ is the depth of the first annular groove (60) in the at least one radial plane and $\alpha_{max}$ is the maximum angle of inclination of the expansion body (26) in the at least one radial plane.

2. Expansion anchor according to claim 1,
**characterized in that**
the maximum angle of inclination ($\alpha_{max}$) of the expansion body (26) is greater than 10° at least in the at least one radial plane.

3. Expansion anchor according to either of the preceding claims,

**characterized in that,**
at least in the at least one radial plane, the angle of inclination ($\beta_{61}$) of the rear flank (61) of the first annular groove (60) and the angle of inclination ($\alpha_{27}$) of the expansion body (26) in a counter-zone (27) of the expansion body (26) differ by less than 8°, and
**in that**, at least in the at least one radial plane, the width ($w_{27}$) of the counter-zone (27) is at least as great as the width ($w_{61}$) of the rear flank (61) of the first annular groove (60).

4. Expansion anchor according to any of the preceding claims,
**characterized in that,**
at least in the at least one radial plane, the front flank (62) of the first annular groove (60) is steeper than the rear flank (61) of the first annular groove (60).

5. Expansion anchor according to any of the preceding claims,
**characterized in that,**
at least in the at least one radial plane, the front flank (62) of the first annular groove (60) adjoins the rear flank (61) of the first annular groove (60).

6. Expansion anchor according to any of the preceding claims,
**characterized in that,**
at least in the at least one radial plane, the expansion sleeve (10) has a front bevel (90) on the inside, and at least a portion of the first annular groove (60) is offset to the rear with respect to the bevel (90).

**7.** Expansion anchor according to any of the preceding claims,
**characterized in that**
the expansion sleeve (10) has at least one second annular groove (70) on the outside in front of the first annular groove (60).

**8.** Expansion anchor according to claim 7,
**characterized in that**,
at least in the at least one radial plane, the width ($w_{70}$) of the second annular groove (70) is smaller than the width ($w_{60}$) of the first annular groove (60).

**9.** Expansion anchor according to any of the preceding claims,
**characterized in that**,
on the outside, the expansion sleeve (10) has at least one annular step (80) that is open at the front.

**10.** Expansion anchor according to any of the preceding claims,
**characterized in that**,
at least in the at least one radial plane, the depth ($d_{60}$) of the first annular groove (60) is at least as great as 0.25 times the remaining wall thickness ($d_{10}$) of the expansion sleeve on the first annular groove (60).

**11.** Expansion anchor according to any of the preceding claims,
**characterized in that**
the anchor bolt (20) has a sleeve stop (22) which limits axial movement of the expansion sleeve (10) away from the expansion body (26).

**12.** Use of an expansion anchor according to any of the preceding claims, in which the expansion body (26) is inserted into the expansion sleeve (10) until, at least in the at least one radial plane, the expansion sleeve (10) runs onto the expansion body (26) at the level of the rear flank (61) of the first annular groove (60).

**Revendications**

**1.** Ancrage expansible comportant un boulon d'ancrage (20) et un manchon expansible (10), lequel entoure le boulon d'ancrage (20), dans lequel un corps expansible (26) pour le manchon expansible (10) est situé sur le boulon d'ancrage (20) et disposé au moins partiellement devant le manchon expansible (10), et dans lequel le manchon expansible (10) présente une première rainure annulaire (60), comportant un flanc avant (62) et un flanc arrière (61), sur sa face extérieure dans une zone avant du manchon expansible (10),

**caractérisée en ce**
**que**, dans au moins un plan radial, ce qui suit s'applique à la largeur $w_{61}$ du flanc arrière (61) de la première rainure annulaire (60) :

$$w_{61} > 0{,}6 * d_{60}/\tan \alpha_{max},$$

$d_{60}$ étant la profondeur de la première rainure annulaire (60) dans l'au moins un plan radial et $\alpha_{max}$ étant l'angle d'inclinaison maximal du corps expansible (26) dans l'au moins un plan radial.

**2.** Ancrage expansible selon la revendication 1,
**caractérisée en ce**
**que** l'angle d'inclinaison maximal ($\alpha_{max}$) du corps expansible (26), au moins dans l'au moins un plan radial, est supérieur à 10°.

**3.** Ancrage expansible selon l'une quelconque des revendications précédentes,

**caractérisée en ce**
**que**, au moins dans l'au moins un plan radial, l'angle d'inclinaison ($\beta_{61}$) du flanc arrière (61) de la première rainure annulaire (60) et l'angle d'inclinaison ($\alpha_{27}$) du corps expansible (26) dans une contre-zone (27) du corps expansible (26) diffèrent de moins de 8°, et
**que**, au moins dans l'au moins un plan radial, la largeur ($w_{27}$) de la contre-zone (27) est au moins aussi grande que la largeur ($w_{61}$) du flanc arrière (61) de la première rainure annulaire (60).

**4.** Ancrage expansible selon l'une quelconque des revendications précédentes,
**caractérisée en ce**
**que**, au moins dans l'au moins un plan radial, le flanc avant (62) de la première rainure annulaire (60) est plus raide que le flanc arrière (61) de la première rainure annulaire (60).

**5.** Ancrage expansible selon l'une quelconque des revendications précédentes,
**caractérisée en ce**
**que**, au moins dans l'au moins un plan radial, le flanc avant (62) de la première rainure annulaire (60) est adjacent au flanc arrière (61) de la première rainure annulaire (60).

**6.** Ancrage expansible selon l'une quelconque des revendications précédentes,
**caractérisée en ce**
**que**, au moins dans l'au moins un plan radial, le manchon expansible (10) comporte un biseau (90) avant sur sa face intérieure, et au moins une partie de la première rainure annulaire (60) est décalée vers l'arrière par rapport au biseau (90).

7.  Ancrage expansible selon l'une quelconque des revendications précédentes,
    **caractérisée en ce**
    **que** le manchon expansible (10) comporte au moins une seconde rainure annulaire (70) sur sa face extérieure devant la première rainure annulaire (60).

8.  Ancrage expansible selon la revendication 7,
    **caractérisée en ce**
    **que**, au moins dans l'au moins un plan radial, la largeur ($w_{70}$) de la seconde rainure annulaire (70) est inférieure à la largeur ($w_{60}$) de la première rainure annulaire (60).

9.  Ancrage expansible selon l'une quelconque des revendications précédentes,
    **caractérisée en ce**
    **que** le manchon expansible (10) comporte au moins un gradin annulaire (80) ouvert côté avant sur sa face extérieure.

10. Ancrage expansible selon l'une quelconque des revendications précédentes,
    **caractérisée en ce**
    **que**, au moins dans l'au moins un plan radial, la profondeur ($d_{60}$) de la première rainure annulaire (60) est au moins aussi grande que 0,25 fois l'épaisseur de paroi résiduelle ($d_{10}$) du manchon expansible sur la première rainure annulaire (60).

11. Ancrage expansible selon l'une quelconque des revendications précédentes,
    **caractérisée en ce**
    **que** le boulon d'ancrage (20) comporte une butée de manchon (22), laquelle limite un déplacement axial du manchon expansible (10) à l'opposé du corps expansible (26).

12. Utilisation d'un ancrage expansible selon l'une quelconque des revendications précédentes, dans lequel le corps expansible (26) est introduit dans le manchon expansible (10) jusqu'à ce que, au moins dans l'au moins un plan radial, le manchon expansible (10) affleure sur le corps expansible (26) à la hauteur du flanc arrière (61) de la première rainure annulaire (60).

Fig. 1

80 70 10 23 20 34
19
26 60, 13 99
61

Fig. 2

28 27 22 23 20 34
26 25 99

Fig. 3

80 70 60, 10 23 20 34
61
26
28 99
27 78 67

Fig. 6

10 20
78 67

EP 3 728 871 B1

Fig. 4

Fig. 5

**IN DER BESCHREIBUNG AUFGEFÜHRTE DOKUMENTE**

**In der Beschreibung aufgeführte Patentdokumente**

- CA 2979509 A1
- DE 102004053255 A1
- EP 2029900 A2
- EP 0308619 A1
- EP 0365475 A2
- EP 3073130 A1
- DE 2046341 A1